(19) Europäisches Patentamt
European Patent Office
Office européen des brevets

(11) EP 2 515 409 B1

(12) **FASCICULE DE BREVET EUROPEEN**

(45) Date de publication et mention de la délivrance du brevet:
**02.08.2017 Bulletin 2017/31**

(51) Int Cl.:
***H02J 3/46*** *(2006.01)* ***H02J 3/06*** *(2006.01)*

(21) Numéro de dépôt: **12354015.5**

(22) Date de dépôt: **05.03.2012**

(54) **Procédé de configuration d'une installation de conversion d'énergie électrique et installation mettant en oeuvre un tel procédé**

Verfahren zur Konfiguration einer elektrischen Energieumwandlungsanlage, und Anlage zur Umsetzung dieses Verfahrens

Method for configuring an electric power conversion facility and facility implementing said method

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **11.03.2011 FR 1100750**

(43) Date de publication de la demande:
**24.10.2012 Bulletin 2012/43**

(73) Titulaire: **Schneider Electric Industries SAS**
**92500 Rueil-Malmaison (FR)**

(72) Inventeur: **Radu, Daniel**
**38050 Grenoble Cedex 09 (FR)**

(74) Mandataire: **Tripodi, Paul et al**
**Schneider Electric Industries SAS**
**Service Propriété Industrielle**
**World Trade Center / 38EE1**
**5 Place Robert Schuman**
**38050 Grenoble Cedex 09 (FR)**

(56) Documents cités:
**WO-A2-2010/066888** **WO-A2-2010/120952**
**US-A1- 2005 116 541**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 515 409 B1

## Description

DOMAINE TECHNIQUE

La présente invention concerne un procédé de configuration d'une installation de conversion d'énergie électrique. Elle concerne également une installation de conversion d'un d'énergie électrique mettant en oeuvre un tel procédé. Elle concerne enfin un programme informatique comprenant un moyen de code de programme informatique adapté à l'exécution d'étapes du procédé.

ETAT DE LA TECHNIQUE

L'invention s'applique en particulier à l'alimentation en énergie électrique de navires à quai.

Les navires présentent, selon leur type, des équipements électriques fonctionnant en 50 ou en 60Hz. Ainsi, lorsqu'un navire est à quai et que son groupe électrogène est à l'arrêt, il faut disposer sur le quai d'une installation permettant l'alimentation électrique de ses équipements avec une source d'énergie électrique adéquate, à une fréquence de 50 Hz ou de 60 Hz.

De manière connue, les navires sont équipés de réseaux électriques basse tension. Aujourd'hui, les besoins en puissance électrique ont considérablement augmenté et les réseaux électriques mis en oeuvre sur les navires sont généralement du type moyenne tension. L'utilisation de la moyenne tension permet d'utiliser des câbles de sections moins importantes et de réduire les pertes énergétiques dans l'alimentation des réseaux des navires.

Les installations permettant l'alimentation électrique de bateaux à quai avec une source d'énergie électrique adéquate (50 Hz ou 60 Hz) sont basées sur la technologie de convertisseurs de fréquence. Prépondérant, Des solutions existantes sur le marché utilisent une technologie moyenne tension ou basse tension avec une installation de conversion unitaire. La commande (de type classique en mode droop ou de type PQ) d'une telle installation se résume à la connexion entre l'installation de conversion et le navire. Avec une telle installation, la redondance n'est pas assurée et durant les opérations de maintenance, les navires ne peuvent plus être alimentés, sauf à prévoir deux installations de conversion.

Les navires alimentés à quai requièrent des puissances importantes allant par exemple de 1 MVA jusqu'à 20MVA en fonction de leur type (vraquier, ferry, porte-conteneurs, paquebots, etc ...). En fonction du type de navire, on peut avoir besoin d'une conversion de fréquence, dans ce cas la problématique majeure est d'assurer un courant de court-circuit suffisant avec l'installation de conversion pour pouvoir garantir la sélectivité des protections, sur le quai et sur le bateau, en cas de court-circuit. Dans les solutions actuelles, où des convertisseurs statiques (semi-conducteurs) sont utilisés, cette capacité est donnée seulement par les caractéristiques thermiques de l'interrupteur statique de puissance utilisé dans la conception de convertisseurs et elle n'est pas suffisante. Cette problématique est majeure pour les navires alimentés, l'isolation du départ en défaut étant une des contraintes majeures imposées aux systèmes d'alimentation électrique des navires à quai.

De plus, les navires requièrent une bonne continuité de l'alimentation en énergie électrique pendant qu'ils sont à quai. Selon le type de navire, les contraintes sont variables. Dans ce contexte, il est nécessaire de fournir des architectures d'installation capables de fournir un bon niveau de redondance et un bon niveau de continuité d'alimentation même après un défaut apparu dans l'installation.

Le document WO 2010/066888 divulgue un procédé de configuration d'une installation de conversion d'énergie électrique selon le préambule de la revendication 1.

Le document US 2005/116541 divulgue un procédé de configuration d'une installation de conversion d'énergie électrique, dont le bus est alimenté par des générateurs et non par des convertisseurs.

EXPOSE DE L'INVENTION

Un but de l'invention est de fournir un procédé de configuration d'une installation de conversion d'énergie électrique permettant de remédier aux problèmes évoqués précédemment et améliorant les installations connues de l'art antérieur. En particulier, l'invention propose un procédé de configuration simple, économique et efficace permettant notamment de rendre l'installation de conversion apte à fournir une puissance de court-circuit nécessaire pour la sélectivité des protections, apte à gérer les défauts et améliorant le rendement de conversion. L'invention porte encore sur une installation de conversion mettant en oeuvre un tel procédé de configuration.

Un procédé de configuration d'une installation de conversion d'énergie électrique selon l'invention, l'installation comprenant plusieurs convertisseurs, comprend une étape de détermination d'un ensemble de convertisseurs à activer et une étape d'activation de cet ensemble de convertisseurs.

Dans un mode de réalisation particulier, le procédé comprend une étape d'interconnexion d'au moins certains des convertisseurs de l'ensemble.

De préférence, dans l'étape de détermination des convertisseurs à activer, on utilise :

- une information de puissance nominale de l'installation, et/ou
- une information de puissance nominale unitaire d'un convertisseur, et/ou
- une information de nombre de réseaux électriques à alimenter à l'aide de l'installation, et/ou
- une information de puissance requise par chaque réseau électrique à alimenter, et/ou
- une information de courant de court-circuit nominal d'un convertisseur, et/ou
- une information de courant de court-circuit maximum requise par un réseau électrique à alimenter.

Avantageusement, pour un réseau électrique à alimenter, on peut déterminer le nombre de convertisseurs à activer selon les formules suivantes :

$$NFC = \text{arrondi.sup}\ (St / SFC) \text{ avec } St = \min\ [m/k \times Sship\ ,\ Sn\ ] \text{ et } Isc\ FC = k \times In \text{ et } Isc\ max = m \times In,$$

dans lesquels,

Sn : puissance nominale maximale de l'installation de conversion ;
St : puissance nominale de l'installation de conversion après configuration ;
SFC : puissance nominale des convertisseurs ;
NFC : nombre de convertisseurs activés ;
Sship i : puissance nominale du réseau à alimenter ;
Isc FC : courant de court-circuit nominal d'un convertisseur ;
k : facteur multiplicatif ;
Isc max : courant de court-circuit maximal demandé par le réseau à alimenter;
m : facteur multiplicatif.

Avantageusement, pour plusieurs réseaux électriques à alimenter, on peut déterminer le nombre de convertisseurs à activer selon les formules suivantes :

$$N_{FC} = \text{arrondi.sup}\ (S_t / S_{FC})$$

avec

$$S_t = \max\left[\sum_{i=1}^{N_{shj}} S_{shipi}, \min\left[S_n, \frac{m}{k} \cdot \max\left[S_{shipi}\right]\right]\right],$$

dans lesquels,

$S_n$ : puissance nominale maximale de l'installation de conversion ;
$S_t$ puissance nominale de l'installation de conversion après configuration ;
$S_{FC}$: puissance nominale des convertisseurs de fréquence ;
$N_{FC}$: nombre de convertisseurs de fréquence activés ;
$S_{ship\ i}$: puissance nominale du réseau i à alimenter ;
k : facteur multiplicatif ;
m : facteur multiplicatif.

De préférence, le procédé comprend une étape de détermination d'au moins un sous-ensemble de convertisseurs à interconnecter parmi l'ensemble des convertisseurs activés et une étape d'interconnexion des convertisseurs de cet au moins un sous-ensemble de convertisseurs.
Avantageusement, l'interconnexion est réalisée par la commande d'au moins un interrupteur commandé.
Dans une installation de conversion d'énergie électrique selon l'invention comprenant plusieurs convertisseurs, ladite l'installation comprend des moyens matériels et/ou logiciels de mise en oeuvre du procédé de configuration tel que défini ci-dessus.

De préférence, les moyens matériels et/ou logiciels comprennent un élément de détermination d'un ensemble de convertisseurs à activer et un élément d'activation de cet ensemble de convertisseurs.
Avantageusement, les moyens matériels et/ou logiciels comprennent un élément de détermination d'au moins un sous-ensemble de convertisseurs à interconnecter parmi l'ensemble des convertisseurs activés et un élément d'interconnexion des convertisseurs de cet au moins un sous-ensemble de convertisseurs.
Avantageusement, l'élément d'interconnexion comprend au moins un interrupteur commandé.
Avantageusement, chaque convertisseur comprend un élément de conversion de fréquence et/ou un élément de conversion de tension.
Un programme informatique selon l'invention, comprend un moyen de code de programme informatique adapté à l'exécution d'étapes du procédé tel que défini ci-dessus, lorsque le programme est exécuté sur un ordinateur.

BREVE DESCRIPTION DES DESSINS

Les dessins annexés représentent, à titre d'exemples, un mode de réalisation d'une installation selon l'invention et un mode d'exécution d'un procédé de configuration selon l'invention.

La figure 1 est un schéma électrique d'un mode de réalisation d'une installation selon l'invention.

La figure 2 est un diagramme représentant le rapport de l'intensité de court-circuit maximale d'un convertisseur sur l'intensité nominale du convertisseur en fonction du temps.

La figure 3 est un diagramme représentant l'évolution de l'intensité du courant de court-circuit d'une installation de conversion de 20 MVA, en fonction de la charge que cette installation doit fournir.

La figure 4 est un tableau donnant, en fonction de la puissance nominale d'un réseau électrique à alimenter et en fonction de la puissance nominale de chacun des convertisseurs composant l'installation de conversion, le nombre de convertisseurs à utiliser.

La figure 5 est un tableau donnant, en fonction de la puissance nominale d'un réseau électrique à alimenter et en fonction de la puissance nominale de chacun des convertisseurs composant l'installation de conversion, le taux de charge des convertisseurs utilisés. Un graphique représente ce taux de charge en fonction de la puissance nominale du réseau à alimenter pour trois puissances différentes de convertisseurs.

La figure 6A est un tableau donnant, en fonction de la puissance nominale d'un premier réseau électrique à alimenter et en fonction de la puissance nominale d'un deuxième réseau électrique à alimenter, la puissance de l'installation configurée.

La figure 6B est un tableau donnant, en fonction de la puissance nominale d'un premier réseau électrique à alimenter et en fonction de la puissance nominale d'un deuxième réseau électrique à alimenter, le nombre de convertisseurs utilisés dans l'installation configurée.

La figure 7 est un ordinogramme d'un mode d'exécution d'un procédé de configuration d'une installation selon l'invention.

DESCRIPTION DETAILLEE DE MODES DE REALISATION PREFERES

Un mode de réalisation d'une installation selon l'invention est décrit ci-après en référence à la figure 1.
Un procédé selon l'invention permet de résoudre les problématiques suivantes :

- Fournir une puissance de court-circuit nécessaire pour la sélectivité des protections ; et/ou
- Gérer les modes de défaut.

L'installation 1 permet de convertir une première tension électrique d'entrée de l'installation en une deuxième tension électrique de sortie de l'installation. La première tension électrique est fournie par un premier réseau électrique 41, notamment un réseau électrique commercial. La deuxième tension électrique est destinée à alimenter un ou plusieurs deuxièmes réseaux électriques 42 comprenant des équipements électriques, comme des réseaux électriques équipant un navire.
Par exemple, le réseau électrique 41, fournit une première source de moyenne ou basse tension. Cette tension d'entrée est convertie en une tension de sortie de fréquence et/ou de tension différente grâce à un convertisseur 2 comprenant un élément 10 de conversion de fréquence et/ou convertie en une tension différente grâce un élément 11 de conversion de tension. En sortie du convertisseur, on obtient une source d'énergie électrique de tension et de fréquence adaptées au deuxième réseau électrique 42.

En aval des convertisseurs, des interrupteurs commandés 13 permettent de relier à des conducteurs 14 de distribution d'énergie électrique ou d'isoler chaque convertisseur de ces conducteurs.

Les deuxièmes réseaux électriques sont raccordés chacun en un différent point des conducteurs de distribution. Par ailleurs, les conducteurs de distribution présentent des interrupteurs commandés 12 permettant d'isoler des segments de ces conducteurs. Il s'ensuit que, selon les états des interrupteurs commandés 13 et 12, un deuxième réseau électrique 42 peut n'être raccordé qu'à un segment des conducteurs de distribution 14 et peut en outre n'être raccordé qu'à une partie des convertisseurs 2 susceptibles d'être raccordés à ce segment du conducteur de distribution. En variante, les interrupteurs commandés 12 ne sont pas présents et le/(les) deuxième réseau électrique 42 peut être raccordé à l'ensemble des conducteurs de distribution 14.

Une unité de commande 100 permet la commande des interrupteurs commandés 13 et 12.

L'installation, notamment l'unité de commande, comprend tous les moyens matériels et/ou logiciels permettant de mettre en oeuvre le procédé de configuration objet de l'invention. En particulier, l'installation comprend des moyens matériels et/ou logiciels permettant de mettre en oeuvre chacune des étapes du procédé objet de l'invention et permettant d'articuler logiquement et/ou temporellement chacune de ces étapes. L'unité de commande comprend notamment un élément 101 de détermination d'un ensemble de convertisseurs à activer et un élément 102 d'activation de cet ensemble de convertisseurs. Pour ce faire, l'élément d'activation est en liaison avec les convertisseurs. L'unité de commande comprend également de préférence un élément 103 de détermination d'au moins un sous-ensemble de convertisseurs à interconnecter parmi l'ensemble des convertisseurs activés. L'installation comprend de préférence un élément 12, 13 d'interconnexion ou cellule de couplage des convertisseurs de cet au moins un sous-ensemble de convertisseurs.

Un mode d'exécution d'un procédé de configuration d'une telle installation est décrit ci-après en référence à la figure 7.

Dans une première étape 105, on initialise le procédé de configuration.

Dans une deuxième étape 110, on entre des données. Ceci peut être réalisé grâce à des capteurs détectant les informations dont on a besoin ou par une saisie manuelle, par exemple effectuée par un opérateur via une interface homme-machine. Notamment, au cours de cette étape, on recueille les données suivantes :

- Sn: puissance nominale de l'installation, et/ou
- SFC: puissance unitaire des convertisseurs, et/ou
- SFCB: puissance d'un ensemble de convertisseurs, et/ou
- Nsh: nombre de navires connectés, et/ou
- Sship i: puissance requise pour le navire i, et/ou
- I sc FC: courant de court-circuit nominal des convertisseurs de fréquence, et/ou
- k: facteur multiplicateur, et/ou
- I sc max: courant de court-circuit maximum demandé par un navire, et/ou
- m: facteur multiplicateur.

Dans une troisième étape 120, on teste s'il y a au moins un deuxième réseau électrique 42 connecté en aval de l'installation de conversion. Si tel n'est pas le cas, on passe à une étape 130 dans laquelle on met en veille l'installation de conversion et, éventuellement, on ouvre un interrupteur commandé principal se trouvant entre le premier réseau électrique et l'installation de conversion. Si tel est le cas, on passe à une étape 140.

Dans l'étape 140, on teste s'il y a un seul deuxième réseau électrique 42 connecté en aval de l'installation de conversion. Si tel est le cas, on passe à une étape 160 dans laquelle on calcule ou on détermine la puissance $S_t$ que doit présenter l'installation de conversion configurée ainsi que le nombre $N_{FC}$ de convertisseurs qui doivent être utilisés dans cette installation de conversion configurée. On détermine donc lesquels des convertisseurs de l'installation de conversion doivent être activés pour fonctionner en parallèle. On définit ainsi un ensemble de convertisseurs à activer. Si tel n'est pas le cas, on passe à une étape 150 dans laquelle on calcule ou on détermine la puissance $S_t$ que doit présenter l'installation de conversion configurée ainsi que le nombre $N_{FC}$ de convertisseurs qui doivent être utilisés dans cette installation de conversion configurée. On détermine donc lesquels des convertisseurs de l'installation de conversion doivent être activés. On définit ainsi un ensemble de convertisseurs à activer. Par ailleurs, on détermine les interrupteurs commandés 12 qui doivent être ouverts et les interrupteurs commandés 12 qui doivent être fermés. Ainsi, on détermine les convertisseurs formant des sous-ensembles interconnectés et dans lesquels les convertisseurs fonctionnent en parallèle.

On passe ensuite, dans les deux cas, à une étape de test 170 dans laquelle on teste si l'installation de conversion était précédemment active ou précédemment inactive. Si l'installation de conversion était précédemment inactive, on passe à une étape 180 dans laquelle on met en fonctionnement les convertisseurs qui ont été déterminés au cours de l'étape 150 ou au cours de l'étape 160. Dans une étape suivante 190, on ferme l'interrupteur principal se trouvant entre le premier réseau électrique et l'installation de conversion.

Si l'installation de conversion était précédemment active, on passe à une étape 200 dans laquelle on ne met en fonctionnement qu'un ou plusieurs convertisseurs supplémentaires si besoin ou dans laquelle on arrête qu'un ou plusieurs convertisseurs inutiles. Ceci se produit uniquement si la demande d'énergie en aval de l'installation de conversion a été modifiée. Si la demande en énergie en aval de l'installation de conversion est inchangée, il n'y a, a priori, pas besoin de désactiver un convertisseur ou d'activer un convertisseur.

Dans une étape suivante 210, le ou les deuxièmes réseaux électriques sont connectés à l'installation de conversion et alimentés par l'installation de conversion.

Dans une étape suivante 220, les paramètres de fonctionnement de l'installation et les besoins en énergie des deuxièmes réseaux sont surveillés.

Dans une étape de test suivante 230, on teste si le besoin de puissance au niveau des deuxièmes réseaux électriques est modifié. Si tel n'est pas le cas, on boucle sur l'étape 220. Si tel est le cas, on boucle sur l'étape 120.

L'installation de conversion selon l'invention et le procédé de configuration selon l'invention permettent d'assurer un courant de court -circuit suffisant pour assurer la sélectivité des protections. Par sélectivité, on entend l'aptitude d'un système de protection à détecter un défaut dans une zone déterminée d'un réseau et à provoquer le déclenchement de disjoncteurs appropriés pour éliminer ce défaut, avec le minimum de perturbation pour la partie saine du réseau.

Ainsi, le procédé de configuration permet de mettre en fonction ou d'arrêter des convertisseurs de l'installation de conversion en fonction de la puissance requise. Ainsi, on peut maximiser la tenue au court - circuit de l'installation tout en minimisant le coût d'investissement et en évitant le déclassement de l'installation. Pour ce faire, comme vu précédemment, on utilise des convertisseurs de faible puissance qu'on connecte en parallèle. Par exemple, on utilise des convertisseurs de préférence de 0,5MVA ou de valeurs de puissances allant entre 0,5 MVA et 5MVA comme montré dans la figure 4, pour réaliser une installation de conversion.

A partir de valeurs caractéristiques pour un convertisseur statique de fréquence, par exemple 2,25xIn pour 0,8s (valeurs nominales), on obtient une caractéristique « Courant de court-circuit/Courant nominal en fonction de temps » d'un convertisseur comme représenté à la figure 2. À partir de cette caractéristique, on peut définir un algorithme de commande ou de configuration de l'installation pour assurer une valeur de courant de court-circuit équivalent par exemple à 3xIn pour 0,8s dans l'ensemble de l'installation de conversion.

L'augmentation de la puissance de court-circuit est réalisée dans le cadre de l'installation de conversion en utilisant des convertisseurs existants dans l'installation de conversion, par leur mise en fonctionnement. Ainsi, la tenue en courant de court-circuit de l'installation de conversion peut évoluer en fonction de la puissance totale fournie.

On suppose maintenant qu'un seul deuxième réseau électrique doit être raccordé à l'installation de conversion. On suppose également que la puissance de l'installation de conversion est de 20MVA. On considère encore le cas le plus contraignant, c'est-à-dire l'alimentation d'un seul deuxième réseau électrique dont la puissance varie de 1 MVA à 20MVA. Sur la figure 4, en fonction de la puissance demandée par la charge, c'est-à-dire le deuxième réseau électrique (première colonne de la figure 4), on met en fonctionnement un ou plusieurs convertisseurs de puissance unitaire moindre (0,5 MVA ou 1 MVA ou 2 MVA ou 3 MVA ou 4 MVA ou 5 MVA) pour pouvoir obtenir une puissance de court-circuit suffisante. Pour des raisons pratiques, on se limite à un surdimensionnement maximal de 33%. Ainsi, pour l'exemple présenté, on assure un courant de court-circuit équivalent à 1 pu jusqu'à 15MVA (où 1 pu signifie 3xIn pendant 0,8s). Sur la figure 3, l'évolution du courant de court-circuit est présentée en fonction de la charge pour l'installation de conversion de 20MVA. Dans l'exemple k=2,25, m = 3 et $S_{ship}$= 1 à 20 MVA, le nombre total de convertisseurs en fonctionnement $N_{FC}$ est calculé selon les formules suivantes. Il est déterminé à partir de la puissance St (puissance nécessaire à mettre en oeuvre ou à configurer au sein de l'installation de conversion pour assurer un courant de court circuit maximal).

$$I_{sc\ FC} = k \times I_n$$

$$I_{sc\ max} = m \times I_n$$

$$S_t = \min\ [m/k \times S_{ship}\ ,\ S_n\ ]$$

$$N_{FC} = \text{arrondi.sup}\ (S_t / S_{FC}) \quad \rightarrow \quad S_t = N_{FC} \times S_{FC}$$

avec

- $S_n$ : puissance nominale de l'installation de conversion ;
- $S_t$ : puissance de l'installation de conversion configurée ;
- $S_{FC}$: puissance unitaire d'un convertisseur ;
- $S_{FCB}$: puissance d'un ensemble de convertisseurs ;
- $N_{FC}$: nombre de convertisseurs activés ;
- $N_{sh}$: nombre de deuxièmes réseaux électriques à alimenter ;
- $S_{ship\ i}$: puissances requise par le deuxième réseau électrique i;
- $I_{sc\ FC}$: courant de court-circuit nominal des convertisseurs;
- k: facteur multiplicateur ;
- $I_{sc\ max}$: courant de court-circuit maximum demandé par un deuxième réseau électrique ;
- m : facteur multiplicateur ;
- arrondi.sup : une application arrondissant à l'entier supérieur.

Ces formules constituent un exemple de réalisation de l'étape 160.

Le choix des convertisseurs à activer ou à mettre en fonctionnement peut être aléatoire.

La figure 5 présente les résultats obtenus pour l'exemple présenté auparavant, où les convertisseurs peuvent avoir de puissances de 0,5MVA, 1 MVA, 2MVA, 3MVA, 4MVA ou 5MVA. En fonction de la puissance des convertisseurs choisis, le rendement global de l'installation est différent, car le taux de charge des convertisseurs varie en fonction de la puissance du deuxième réseau électrique connecté. Ainsi, on obtient un très bon rendement, avec un taux de charge constant dans le cas d'utilisation de convertisseurs de faible puissance, par exemple 0,5MVA ou 1MVA. Les résultats sont récapitulés à la figure 5. Dans le tableau, chaque colonne représente le taux de charge de l'installation de conversion configurée et utilisant des convertisseurs dont la puissance détermine la colonne du tableau. La première colonne indique la puissance du deuxième réseau électrique. Le diagramme de la figure 5 représente les variations du taux de charge de trois installations configurées utilisant respectivement des convertisseurs de 0,5MVA, 3MVA et 5MVA, en fonction de la puissance du deuxième réseau électrique.

Dans le cas de l'alimentation de plusieurs deuxièmes réseaux électriques en même temps à partir de l'installation de conversion, les règles de commande sont similaires et tiennent compte de la puissance consommée par chaque deuxième réseau électrique. On considère qu'on ne peut pas avoir des courts-circuits simultanés sur deux deuxièmes réseaux électriques. Le courant de court-circuit requis pour le deuxième réseau électrique en défaut est fourni par l'ensemble de l'installation de conversion configurée. Le nombre total de convertisseurs en fonction est calculé selon les formules suivantes :

$$S_t = \max\left[\sum_{i=1}^{N_{shj}} S_{shipi}, \min\left[S_n, \frac{m}{k} \cdot \max\left[S_{shipi}\right]\right]\right]$$

$$N_{FC} = \text{arrondi.sup}\ (S_t / S_{FC}) \quad \rightarrow \quad S_t = N_{FC} \times S_{FC}$$

Ces formules constituent un exemple de réalisation de l'étape 150.

Le choix des convertisseurs à activer ou à mettre en fonctionnement peut être aléatoire.

Comme illustration, on présente, sur les figures 6A et 6B, un cas où deux deuxièmes réseaux sont connectés en même temps sur une installation de conversion de 20MVA. Ainsi, en fonction de la puissance consommée sur les deux deuxièmes réseaux électriques (Ship 1 et Ship 2), on détermine la valeur $S_t$ de la puissance nécessaire à mettre en oeuvre au sein de l'installation de conversion pour assurer un courant de court-circuit maximal adéquat. Le nombre de convertisseurs $N_{FC}$ à mettre en fonctionnement ou à activer est donné par la formule précédente.

Pour assurer une bonne continuité de disponibilité de l'alimentation des deuxièmes réseaux électriques, aussi bien en cas de défaut sur des convertisseurs que dans les deuxièmes réseaux électriques, l'architecture électrique est de préférence de type double antenne. Ainsi, l'installation électrique est prévue de préférence avec des cellules de couplage 12 sur le jeu de barres secondaires 14. En variante, l'architecture électrique est de type simple antenne, les interrupteurs commandés 12 n'existant pas.

Il y a deux possibilités d'exploitation en régime nominal de fonctionnement de l'installation, en fonction de la puissance requise par les différents deuxièmes réseaux électriques connectés :

- dans le cas d'utilisation de plusieurs deuxièmes réseaux électriques de puissances équivalentes, les interrupteurs commandés 12 sont normalement ouverts. Cela permet d'éviter une défaillance d'alimentation dans les autres réseaux électriques en cas de défaut sur un deuxième réseau électrique,
- dans le cas d'utilisation de plusieurs deuxièmes réseaux électriques de puissances très différentes, notamment avec un deuxième réseau dont la puissance dépasse la puissance que l'on peut obtenir par le fonctionnement de tous les convertisseurs pouvant être reliés à un segment du conducteur 14 de distribution, l'installation doit être configurée avec un ou plusieurs interrupteurs commandés 12 normalement fermés. Cela permet l'alimentation de deuxièmes réseaux électriques de puissances différentes, voire l'alimentation d'un seul deuxième réseau électrique dont la puissance est équivalente ou quasi équivalente à la puissance totale de l'installation de conversion. Cependant, pour préserver la continuité de service au niveau global en cas de défaut sur un des deuxièmes réseaux connectés, des interrupteurs commandés 12 peuvent être ouverts. Ainsi, on peut effectuer une isolation des réseaux. Le choix de l'interrupteur commandé normalement ouvert est fait en fonction de la puissance des deuxièmes réseaux électriques connectés. De préférence, le moins important en terme de puissance demandée est isolé.

Dans le cas où certains interrupteurs commandés sont ouverts, le choix des convertisseurs à activer n'est de préférence pas aléatoire, mais fait en fonction des localisations des convertisseurs relativement aux interrupteurs commandés 12 ouverts et aux conducteurs 14.

Le fonctionnement décrit dans les deux cas précédents permet d'assurer la puissance de court-circuit nécessaire pour obtenir la sélectivité de protection et la non-propagation de défauts sur les départs des deuxièmes réseaux électriques.

Dans le cas d'architecture électrique de type simple antenne, quand les interrupteurs commandés 12 n'existant pas, l'installation permet d'assurer la puissance de court-circuit nécessaire pour obtenir la sélectivité de protection.

Un autre avantage de l'installation de conversion et du procédé de configuration est de permettre l'utilisation d'un nombre minimal de convertisseurs pour assurer la puissance de court-circuit nécessaire pour l'installation. On évite ainsi le déclassement trop important de l'installation et l'augmentation des coûts d'investissements. Cela permet aussi de maintenir une bonne efficacité énergétique de l'installation de conversion, le taux de charge des convertisseurs étant maintenu à des valeurs toujours supérieures à 65%, avec un très bon rendement global. En effet, par la mise en fonctionnement et l'arrêt des convertisseurs, on évite les faibles taux de charges pour lesquels le rendement des convertisseurs est moins bon.

Le procédé de configuration peut utiliser une règle de surdimensionnement dégressive. Il permet que l'installation configurée fournisse une puissance de court-circuit suffisante pour la sélectivité des protections. Il permet aussi de gérer les modes de défaut (foisonnement de charges quand tout fonctionne normalement et isolation des départs en cas de court-circuit sur un réseau). Par ailleurs, de préférence, l'installation présente des moyens permettant son redémarrage suite à un défaut.

Les différents interrupteurs commandés, notamment les interrupteurs commandés 12 et 13, sont par exemple des disjoncteurs.

## Revendications

1. Procédé de configuration d'une installation (1) de conversion d'énergie électrique, l'installation comprenant plusieurs convertisseurs (2),
   **caractérisé en ce qu'**il comprend une étape de détermination d'un ensemble de convertisseurs à activer pour fournir un courant de court-circuit garantissant la sélectivité de la protection électrique de l'installation et une étape d'activation de cet ensemble de convertisseurs,
   dans ladite étape de détermination, pour un réseau électrique (42) à alimenter, on peut déterminer le nombre de convertisseurs à activer selon les formules suivantes :

$$N_{FC} = \text{arrondi.sup}\ (S_t / S_{FC}) \text{ avec } S_t = \min\ [m/k \times S_{ship}\ ,\ S_n\ ] \text{ et } I_{sc\ FC} = k \times In \text{ et } I_{sc\ max} = m \times In,$$

   dans lesquels,

   $S_n$ : puissance nominale maximale de l'installation de conversion ;
   $S_t$ : puissance nominale de l'installation de conversion après configuration ;
   $S_{FC}$: puissance nominale des convertisseurs;

$N_{FC}$: nombre de convertisseurs activés ;
$S_{ship\ i}$: puissance nominale du réseau à alimenter ;
$I_{sc\ FC}$: courant de court-circuit nominal d'un convertisseur;
k : facteur multiplicatif ;
$_{Isc\ max}$: courant de court-circuit maximal demandé par le réseau à alimenter;
m : facteur multiplicatif;
In : courant nominal d'un convertisseur.

**2.** Procédé de configuration selon la revendication 1, **caractérisé en ce qu'**il comprend une étape d'interconnexion d'au moins certains des convertisseurs de l'ensemble.

**3.** Procédé de configuration selon la revendication 1 ou 2, **caractérisé en ce que**, dans l'étape de détermination des convertisseurs à activer, on utilise :

- une information de puissance nominale de l'installation, et/ou
- une information de puissance nominale unitaire d'un convertisseur, et/ou
- une information de nombre de réseaux électriques à alimenter à l'aide de l'installation, et/ou
- une information de puissance requise par chaque réseau électrique à alimenter, et/ou
- une information de courant de court-circuit nominal d'un convertisseur, et/ou
- une information de courant de court-circuit maximum requise par un réseau électrique à alimenter.

**4.** Procédé de configuration selon l'une des revendications précédentes, **caractérisé en ce que**, pour plusieurs réseaux électriques (42) à alimenter, on peut déterminer le nombre de convertisseurs à activer selon les formules suivantes :

$$N_{FC} = \text{arrondi.sup}\ (S_t\ /\ S_{FC})$$

avec

$$S_t = \max\left[\sum_{i=1}^{N_{shj}} S_{shipi}, \min\left[S_n, \frac{m}{k}\cdot\max\left[S_{shipi}\right]\right]\right],$$

dans lesquels,

$S_n$ : puissance nominale maximale de l'installation de conversion ;
$S_t$ : puissance nominale de l'installation de conversion après configuration ;
$S_{FC}$: puissance nominale des convertisseurs de fréquence ;
$N_{FC}$: nombre de convertisseurs de fréquence activés ;
$S_{ship\ i}$: puissances nominale du réseau i à alimenter ;
k : facteur multiplicatif ;
m : facteur multiplicatif.

**5.** Procédé de configuration selon l'une des revendications précédentes, **caractérisé en ce qu'**il comprend une étape de détermination d'au moins un sous-ensemble de convertisseurs à interconnecter parmi l'ensemble des convertisseurs activés et une étape d'interconnexion des convertisseurs de cet au moins un sous-ensemble de convertisseurs.

**6.** Procédé de configuration selon la revendication précédente, **caractérisé en ce que** l'interconnexion est réalisée par la commande d'au moins un interrupteur commandé (12, 13).

**7.** Installation (1) de conversion d'énergie électrique comprenant plusieurs convertisseurs (2), l'installation comprenant des moyens matériels (11, 12, 13, 100) et/ou logiciels de mise en oeuvre du procédé de configuration selon l'une des revendications précédentes.

**8.** Installation (1) selon la revendication précédente, **caractérisée en ce que** les moyens matériels et/ou logiciels comprennent un élément (101) de détermination d'un ensemble de convertisseurs à activer et un élément (102) d'activation de cet ensemble de convertisseurs.

**9.** Installation (1) selon la revendication 7 ou 8, **caractérisée en ce que** les moyens matériels et/ou logiciels comprennent un élément (103) de détermination d'au moins un sous-ensemble de convertisseurs à interconnecter parmi l'ensemble des convertisseurs activés et un élément (12, 13, 14) d'interconnexion des convertisseurs de cet au moins un sous-ensemble de convertisseurs.

**10.** Installation (1) selon la revendication précédente, **caractérisée en ce que** l'élément d'interconnexion comprend au moins un interrupteur commandé (12, 13).

**11.** Installation (1) selon l'une des revendications 7 à 10, **caractérisée en ce que** chaque convertisseur comprend un élément (10) de conversion de fréquence et/ou un élément de conversion de tension (11).

**12.** Programme informatique comprenant un moyen de code de programme informatique adapté à l'exécution d'étapes du procédé selon l'une des revendications 1 à 6, lorsque le programme est exécuté sur un ordinateur.

**Patentansprüche**

**1.** Verfahren zur Konfiguration einer Anlage (1) zur Umwandlung elektrischer Energie, wobei die Anlage mehrere Konverter (2) aufweist,
**dadurch gekennzeichnet, dass** es einen Schritt zum Bestimmen einer Gruppe von zu aktivierenden Konvertern, um einen Kurzschlussstrom zu liefern, was die Selektivität des elektrischen Schutzes der Anlage garantiert und einen Schritt zum Aktivieren dieser Gruppe von Konvertern aufweist,
bei welchem Schritt zum Bestimmen für ein zu versorgendes elektrisches Netz (42) die Zahl von zu aktivierenden Konvertern gemäß der folgenden Formeln bestimmt werden kann:

$$N_{FC} = \text{Aufrunden } (S_t / S_{FC}) \text{ mit } S_t = \min [m/k \times S_{ship}, S_n ] \text{ und } I_{sc\ FC} = k \times In \text{ und } I_{sc\ max} = m \times In,$$

bei welchen

$S_n$: Nominale, maximale Leistung der Umwandlungsanlage;
Si: Nominale, maximale Leistung der Umwandlungsanlage nach Konfiguration;
$S_{FC}$: Nominale Leistung der Konverter;
$N_{FC}$: Anzahl der aktivierten Konverter;
$S_{ship}$: Nominale Leistung des zu versorgenden Netzes;
$I_{scFC}$: Nominaler Kurzschlussstrom eines Konverters;
k: Multiplikationsfaktor;
$I_{sc\ max}$: Maximaler, von dem zu versorgenden Netz geforderter Kurzschlussstrom;
m: Multiplikationsfaktor;
In: Nominaler Strom eines Konverters.

**2.** Verfahren zur Konfiguration nach Anspruch 1, **dadurch gekennzeichnet, dass** es einen Schritt zur Verbindung von mindestens einigen Konvertern der Gruppe aufweist.

**3.** Verfahren zur Konfiguration nach Anspruch 1 oder 2, **dadurch gekennzeichnet, dass** beim Schritt zum Bestimmen der zu aktivierenden Konverter folgendes verwendet wird:

- eine Information über die nominale Leistung der Anlage und/oder
- eine Information über die einheitliche nominale Leistung eines Konverters und/oder
- eine Information über die Anzahl der mit Hilfe der Anlage zu versorgenden elektrischen Netze und/oder
- eine Information über die für jedes zu versorgende elektrische Netz erforderliche Leistung und/oder
- eine Information über den nominalen Kurzschlussstrom eines Konverters und/oder
- eine Information über den für ein zu versorgendes elektrisches Netz erforderlichen maximalen Kurzschlussstrom.

**4.** Verfahren zur Konfiguration nach einem der vorhergehenden Ansprüche, **dadurch gekennzeichnet, dass** für mehrere zu versorgende elektrische Netze (42) die Anzahl an zu aktivierenden Konvertern gemäß der folgenden Formeln bestimmt werden kann:

$$N_{FC} = \text{Aufrunden}\ (S_t\ /\ S_{FC})$$

mit

$$S_t = \max\left[\sum_{i=1}^{N_{shj}} S_{shipi}, \min\left[S_n, \frac{m}{k}\cdot\max\left[S_{shipi}\right]\right]\right],$$

bei welchen

$S_n$: Nominale, maximale Leistung der Umwandlungsanlage;
$S_t$: Nominale Leistung der Umwandlungsanlage nach Konfiguration;
$S_{FC}$: Nominale Leistung der Frequenz-Konverter;
$N_{FC}$: Anzahl der aktivierten Frequenz-Konverter;
$S_{shipi}$: Nominale Leistung des zu versorgenden Netzes;
k: Multiplikationsfaktor;
m: Multiplikationsfaktor.

**5.** Verfahren zur Konfiguration nach einem der vorhergehenden Ansprüche, **dadurch gekennzeichnet, dass** es einen Schritt zum Bestimmen von mindestens einer Untergruppe von zu verbindenden Konvertern aus der Gruppe der aktivierten Konverter und einen Schritt zur Verbindung der Konverter dieser mindestens einen Untergruppe von Konvertern.

**6.** Verfahren zur Konfiguration nach einem der vorhergehenden Ansprüche, **dadurch gekennzeichnet, dass** die Verbindung durch die Ansteuerung eines gesteuerten Schalters (12, 13) ausgeführt wird.

**7.** Anlage (1) zur Umwandlung elektrischer Energie, aufweisend mehrere Konverter (2), wobei die Anlage materielle (11, 12, 13, 100) und/oder Software-Mittel zur Durchführung des Verfahrens zur Konfiguration gemäß einem der vorhergehenden Ansprüche aufweist.

**8.** Anlage (1) nach dem vorhergehenden Anspruch, **dadurch gekennzeichnet, dass** die materiellen und/oder Software-Mittel ein Element (101) zum Bestimmen einer Gruppe zu aktivierender Konverter und ein Element (102) zur Aktivierung dieser Gruppe von Konvertern aufweisen.

**9.** Anlage (1) nach Anspruch 7 oder 8, **dadurch gekennzeichnet, dass** die materiellen und/oder Software-Mittel ein Element (103) zum Bestimmen von mindestens einer Untergruppe von zu verbindenden Konvertern aus der Gruppe der aktivierten Konverter und ein Element (12, 13, 14) zur Verbindung der Konverter dieser mindestens einen Untergruppe von Konvertern aufweist.

**10.** Anlage (1) nach einem der vorhergehenden Ansprüche, **dadurch gekennzeichnet, dass** das Element zur Verbindung mindestens einen gesteuerten Schalter (12, 13) aufweist.

**11.** Anlage (1) nach einem der Ansprüche 7 bis 10, **dadurch gekennzeichnet, dass** jeder Konverter ein Element (10) zur Umwandlung der Frequenz und/oder ein Element zur Umwandlung der Spannung (11) aufweist.

**12.** Computerprogramm, aufweisend ein Mittel mit Computerprogrammcode, welches für die Ausführung von Schritten des Verfahrens nach einem der Ansprüche 1 bis 6 angepasst ist, wenn das Programm auf einem Rechner ausgeführt wird.

## Claims

1. A configuration method of an electric power conversion installation (1), the installation comprising several converters (2), **characterized in that** it comprises a step of determining a set of converters to be activated to provide a short-circuit current guaranteeing selectivity of the electrical protection of the installation and an activation step of this set of converters,
in said step of determining, for an electric power system (42) to be supplied, the number of converters to be activated can be determined according to the following formulas:

$$N_{FC} = \text{rounded.up}\ (S_t / S_{FC}) \text{ with } S_t = \min\ [m/k \times S_{ship}, S_n\ ] \text{ and } I_{sc\ FC} = k \times In \text{ and } I_{sc\ max} = m \times In,$$

in which,

$S_n$ : maximum rated power of the conversion installation;
$S_t$ : rated power of the conversion installation after configuration;
$S_{FC}$ : rated power of the converters;
$N_{FC}$ : number of converters activated;
$S_{ship\ i}$ : rated power of the power system to be supplied;
$I_{sc\ FC}$ : rated short-circuit current of a converter;
k : multiplication factor;
$I_{sc\ max}$ : maximum short-circuit current demanded by the power system to be supplied;
m : multiplication factor;
In: rated current of a converter.

2. The configuration method according to claim 1, **characterized in that** it comprises an interconnection step of at least certain of the converters of the set.

3. The configuration method according to claim 1 or 2, **characterized in that**, in the step of determining the converters to be activated, the following are used:

- information on the rated power of the installation, and/or
- information on the unitary rated power of a converter, and/or
- information on the number of electric power systems to be supplied by means of the installation, and/or
- information on the power required by each electric power system to be supplied, and/or
- information on the rated short-circuit current of a converter, and/or
- information on the maximum short-circuit current required by an electric power system to be supplied.

4. The configuration method according to one of the foregoing claims, **characterized in that**, for several electric power systems (42) to be supplied, the number of converters to be activated can be determined according to the following formulas:

$$N_{FC} = \text{rounded.up}\ (S_t / S_{FC})$$

with

$$S_t = \max\left[\sum_{i=1}^{N_{shj}} S_{shipi}, \min\left[S_n, \frac{m}{k} \cdot \max\left[S_{shipi}\right]\right]\right],$$

in which,

$S_n$ : maximum rated power of the conversion installation;
$S_t$ : rated power of the conversion installation after configuration;

$S_{FC}$ : rated power of the frequency converters;
$N_{FC}$ : number of frequency converters activated;
$S_{ship\ i}$ : rated power of the power system i to be supplied;
k : multiplication factor;
m : multiplication factor.

**5.** The configuration method according to one of the foregoing claims, **characterized in that** it comprises a step of determining at least one sub-set of converters to be interconnected from among the set of activated converters and an interconnection step of the converters of this at least one converter sub-set.

**6.** The configuration method according to the previous claim, **characterized in that** interconnection is performed by control of at least one controlled switch (12, 13).

**7.** An electric power conversion installation (1) comprising several converters (2), the installation comprising hardware means (11, 12, 13, 100) and/or software means for implementing the configuration method according to one of the foregoing claims.

**8.** The installation (1) according to the previous claim, **characterized in that** the hardware and/or software means comprise an element (101) for determining a set of converters to be activated and an activation element (102) of this set of converters.

**9.** The installation (1) according to claim 7 or 8, **characterized in that** the hardware and/or software means comprise an element (103) for determining at least one sub-set of converters to be interconnected from among the set of activated converters and an interconnection element (12, 13, 14) of the converters of this at least one converter sub-set.

**10.** The installation (1) according to the previous claim, **characterized in that** the interconnection element comprises at least one controlled switch (12, 13).

**11.** The installation (1) according to one of claims 7 to 10, **characterized in that** each converter comprises a frequency conversion element (10) and/or a voltage conversion element (11).

**12.** A computer program comprising computer program encoding means suitable for execution of steps of the method according to one of claims 1 to 6 when the program is executed on a computer.

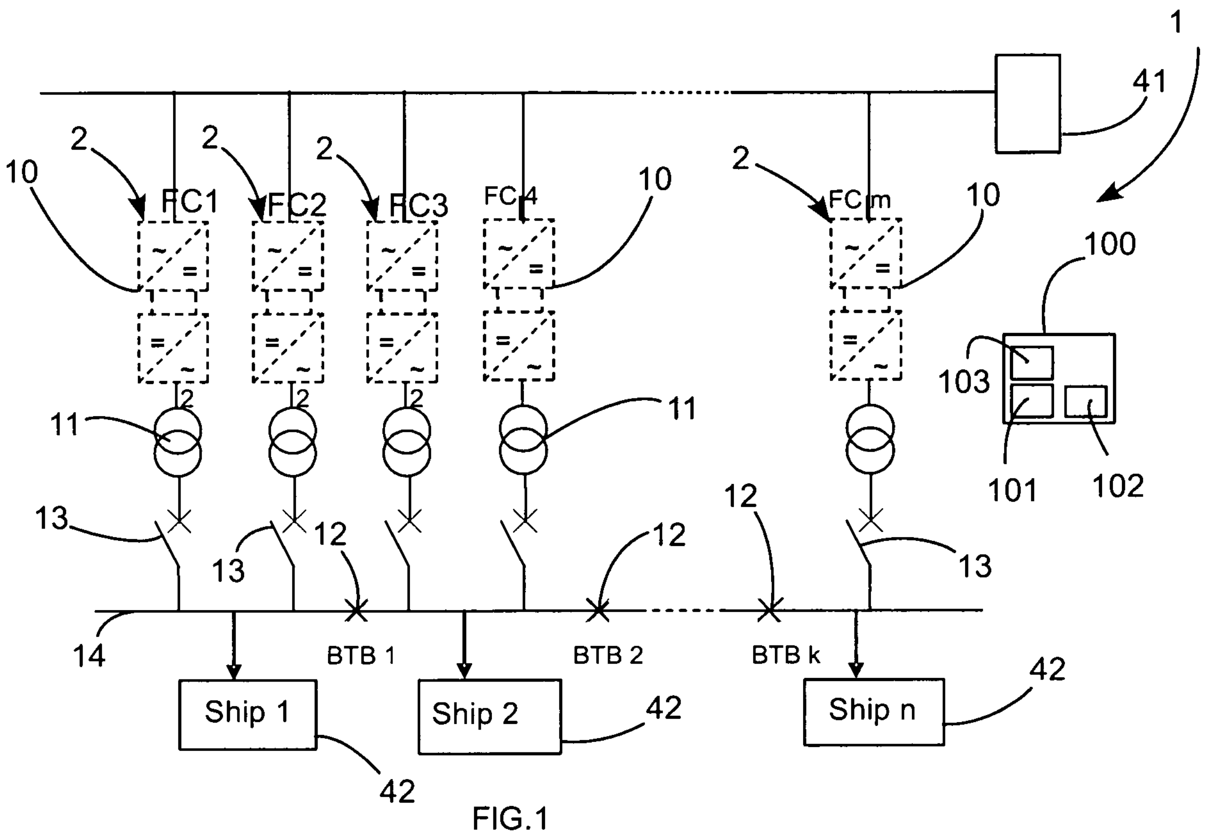
1
41
2
10
FC1
2
FC2
2
FC3
FC 4
10
2
FC m
10
100
103
101
102
11
11
13
13
12
12
12
13
14
BTB 1
BTB 2
BTB k
Ship 1
Ship 2
Ship n
42
42
42

FIG.1

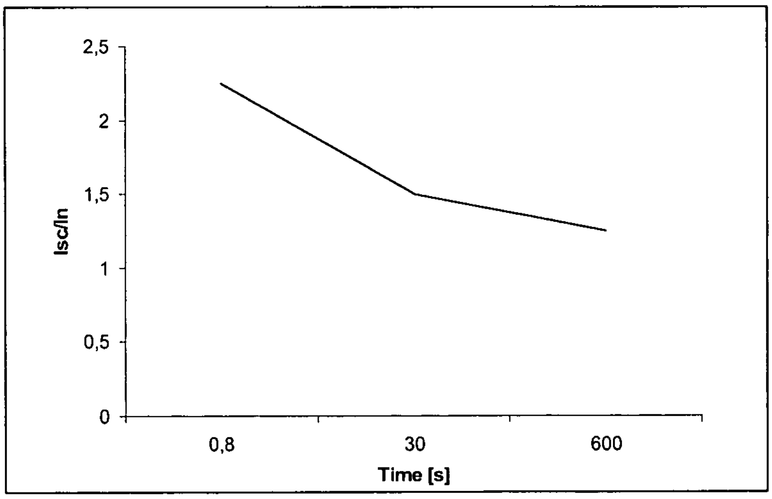
2,5
2
1,5
1
0,5
0
Isc/In
0,8
30
600
Time [s]

FIG.2

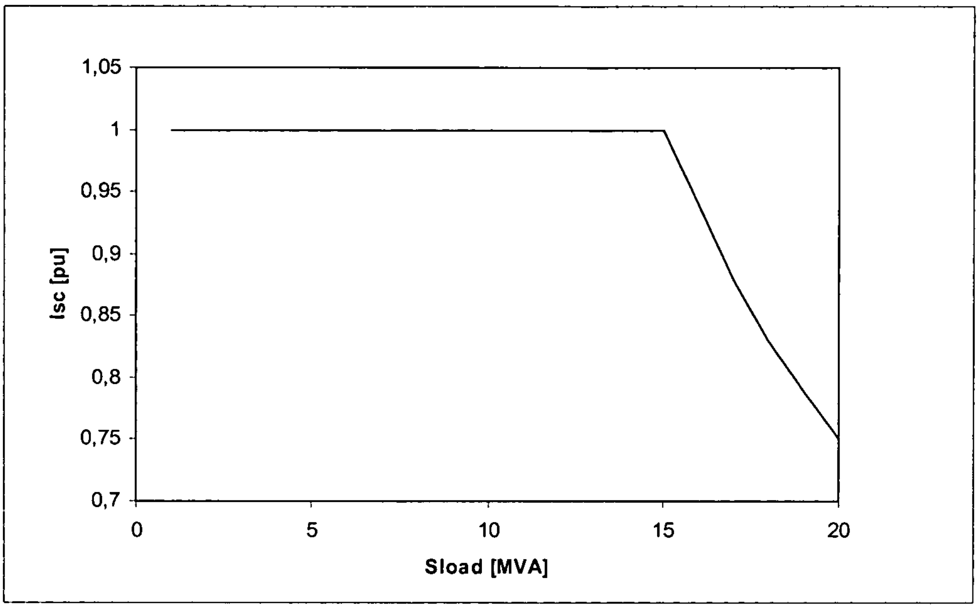


FIG.3

| $S_{ship}$ [MVA] | $S_t$ [MVA] | $N_{FC}$ (0,5MVA) | $N_{FC}$ (1MVA) | $N_{FC}$ (2MVA) | $N_{FC}$ (3MVA) | $N_{FC}$ (4MVA) | $N_{FC}$ (5MVA) |
|---|---|---|---|---|---|---|---|
| 1 | 1,3 | 3 | 2 | 1 | 1 | 1 | 1 |
| 2 | 2,7 | 6 | 3 | 2 | 1 | 1 | 1 |
| 3 | 4,0 | 8 | 4 | 2 | 2 | 1 | 1 |
| 4 | 5,3 | 11 | 6 | 3 | 2 | 2 | 2 |
| 5 | 6,7 | 14 | 7 | 4 | 3 | 2 | 2 |
| 6 | 8,0 | 16 | 8 | 4 | 3 | 2 | 2 |
| 7 | 9,3 | 19 | 10 | 5 | 4 | 3 | 2 |
| 8 | 10,7 | 22 | 11 | 6 | 4 | 3 | 3 |
| 9 | 12,0 | 24 | 12 | 6 | 4 | 3 | 3 |
| 10 | 13,3 | 27 | 14 | 7 | 5 | 4 | 3 |
| 11 | 14,7 | 30 | 15 | 8 | 5 | 4 | 3 |
| 12 | 16,0 | 32 | 16 | 8 | 6 | 4 | 4 |
| 13 | 17,3 | 35 | 18 | 9 | 6 | 5 | 4 |
| 14 | 18,7 | 38 | 19 | 10 | 7 | 5 | 4 |
| 15 | 20,0 | 40 | 20 | 10 | 7 | 5 | 4 |
| 16 | 20,0 | 40 | 20 | 10 | 7 | 5 | 4 |
| 17 | 20,0 | 40 | 20 | 10 | 7 | 5 | 4 |
| 18 | 20,0 | 40 | 20 | 10 | 7 | 5 | 4 |
| 19 | 20,0 | 40 | 20 | 10 | 7 | 5 | 4 |
| 20 | 20,0 | 40 | 20 | 10 | 7 | 5 | 4 |

FIG.4

| $S_{ship}$ [MVA] | $S_t$ [MVA] | FC Load [%] (0,5MVA) | FC Load [%] (1MVA) | FC Load [%] (2MVA) | FC Load [%] (3MVA) | FC Load [%] (4MVA) | FC Load [%] (5MVA) |
|---|---|---|---|---|---|---|---|
| 1 | 1,3 | 89 | 67 | 67 | 44 | 33 | 27 |
| 2 | 2,7 | 89 | 89 | 67 | 89 | 67 | 53 |
| 3 | 4,0 | 100 | 100 | 100 | 67 | 100 | 80 |
| 4 | 5,3 | 97 | 89 | 89 | 89 | 67 | 53 |
| 5 | 6,7 | 95 | 95 | 83 | 74 | 83 | 67 |
| 6 | 8,0 | 100 | 100 | 100 | 89 | 100 | 80 |
| 7 | 9,3 | 98 | 93 | 93 | 78 | 78 | 93 |
| 8 | 10,7 | 97 | 97 | 89 | 89 | 89 | 71 |
| 9 | 12,0 | 100 | 100 | 100 | 100 | 100 | 80 |
| 10 | 13,3 | 99 | 95 | 95 | 89 | 83 | 89 |
| 11 | 14,7 | 98 | 98 | 92 | 98 | 92 | 98 |
| 12 | 16,0 | 100 | 100 | 100 | 89 | 100 | 80 |
| 13 | 17,3 | 99 | 96 | 96 | 96 | 87 | 87 |
| 14 | 18,7 | 98 | 98 | 93 | 89 | 93 | 93 |
| 15 | 20,0 | 100 | 100 | 100 | 95 | 100 | 100 |
| 16 | 20,0 | 100 | 100 | 100 | 95 | 100 | 100 |
| 17 | 20,0 | 100 | 100 | 100 | 95 | 100 | 100 |
| 18 | 20,0 | 100 | 100 | 100 | 95 | 100 | 100 |
| 19 | 20,0 | 100 | 100 | 100 | 95 | 100 | 100 |
| 20 | 20,0 | 100 | 100 | 100 | 95 | 100 | 100 |

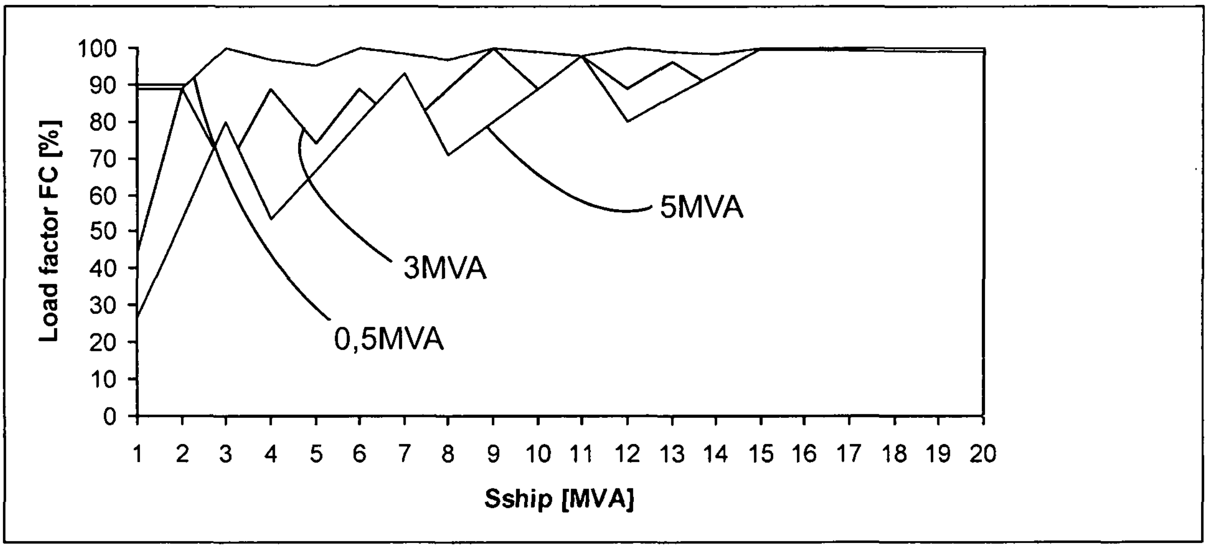


FIG.5

Ship 2 [MVA]

| Ship 1 [MVA] | 1 | 2 | 3 | 4 | 5 | 6 | 7 | 8 | 9 | 10 | 11 | 12 | 13 | 14 | 15 | 16 | 17 | 18 | 19 |
|---|---|---|---|---|---|---|---|---|---|---|---|---|---|---|---|---|---|---|---|
| 1 | 2,0 | 3,0 | 4,0 | 5,3 | 6,7 | 8,0 | 9,3 | 10,7 | 12,0 | 13,3 | 14,7 | 16,0 | 17,3 | 18,7 | 20,0 | 20,0 | 20,0 | 20,0 | 20,0 |
| 2 | 3,0 | 4,0 | 5,0 | 6,0 | 7,0 | 8,0 | 9,3 | 10,7 | 12,0 | 13,3 | 14,7 | 16,0 | 17,3 | 18,7 | 20,0 | 20,0 | 20,0 | 20,0 | |
| 3 | 4,0 | 5,0 | 6,0 | 7,0 | 8,0 | 9,0 | 10,0 | 11,0 | 12,0 | 13,3 | 14,7 | 16,0 | 17,3 | 18,7 | 20,0 | 20,0 | 20,0 | | |
| 4 | 5,3 | 6,0 | 7,0 | 8,0 | 9,0 | 10,0 | 11,0 | 12,0 | 13,0 | 14,0 | 15,0 | 16,0 | 17,3 | 18,7 | 20,0 | 20,0 | | | |
| 5 | 6,7 | 7,0 | 8,0 | 9,0 | 10,0 | 11,0 | 12,0 | 13,0 | 14,0 | 15,0 | 16,0 | 17,0 | 18,0 | 19,0 | 20,0 | | | | |
| 6 | 8,0 | 8,0 | 9,0 | 10,0 | 11,0 | 12,0 | 13,0 | 14,0 | 15,0 | 16,0 | 17,0 | 18,0 | 19,0 | 20,0 | | | | | |
| 7 | 9,3 | 9,3 | 10,0 | 11,0 | 12,0 | 13,0 | 14,0 | 15,0 | 16,0 | 17,0 | 18,0 | 19,0 | 20,0 | | | | | | |
| 8 | 10,7 | 10,7 | 11,0 | 12,0 | 13,0 | 14,0 | 15,0 | 16,0 | 17,0 | 18,0 | 19,0 | 20,0 | | | | | | | |
| 9 | 12,0 | 12,0 | 12,0 | 13,0 | 14,0 | 15,0 | 16,0 | 17,0 | 18,0 | 19,0 | 20,0 | | | | | | | | |
| 10 | 13,3 | 13,3 | 13,3 | 14,0 | 15,0 | 16,0 | 17,0 | 18,0 | 19,0 | 20,0 | | | | | | | | | |
| 11 | 14,7 | 14,7 | 14,7 | 15,0 | 16,0 | 17,0 | 18,0 | 19,0 | 20,0 | | | | | | | | | | |
| 12 | 16,0 | 16,0 | 16,0 | 16,0 | 17,0 | 18,0 | 19,0 | 20,0 | | | | | | | | | | | |
| 13 | 17,3 | 17,3 | 17,3 | 17,3 | 18,0 | 19,0 | 20,0 | | | | | | | | | | | | |
| 14 | 18,7 | 18,7 | 18,7 | 18,7 | 19,0 | 20,0 | | | | | | | | | | | | | |
| 15 | 20,0 | 20,0 | 20,0 | 20,0 | 20,0 | | | | | | | | | | | | | | |
| 16 | 20,0 | 20,0 | 20,0 | 20,0 | | | | | | | | | | | | | | | |
| 17 | 20,0 | 20,0 | 20,0 | | | | | | | | | | | | | | | | |
| 18 | 20,0 | 20,0 | | | | | | | | | | | | | | | | | |
| 19 | 20,0 | | | | | | | | | | | | | | | | | | |

$$S_t = \max\left[\sum_{i=1}^{N_{shp}} S_{shipi}, \min\left[S_n, \frac{m}{k} \cdot \max\left[S_{shipi}\right]\right]\right]$$

FIG.6A

Ship 2 [MVA]

| Ship 1 [MVA] | 1 | 2 | 3 | 4 | 5 | 6 | 7 | 8 | 9 | 10 | 11 | 12 | 13 | 14 | 15 | 16 | 17 | 18 | 19 |
|---|---|---|---|---|---|---|---|---|---|---|---|---|---|---|---|---|---|---|---|
| 1 | 4,0 | 6,0 | 8,0 | 11,0 | 14,0 | 16,0 | 19,0 | 22,0 | 24,0 | 27,0 | 30,0 | 32,0 | 35,0 | 38,0 | 40,0 | 40,0 | 40,0 | 40,0 | 40,0 |
| 2 | 6,0 | 8,0 | 10,0 | 12,0 | 14,0 | 16,0 | 19,0 | 22,0 | 24,0 | 27,0 | 30,0 | 32,0 | 35,0 | 38,0 | 40,0 | 40,0 | 40,0 | 40,0 | |
| 3 | 8,0 | 10,0 | 12,0 | 14,0 | 16,0 | 18,0 | 20,0 | 22,0 | 24,0 | 27,0 | 30,0 | 32,0 | 35,0 | 38,0 | 40,0 | 40,0 | 40,0 | | |
| 4 | 11,0 | 12,0 | 14,0 | 16,0 | 18,0 | 20,0 | 22,0 | 24,0 | 26,0 | 28,0 | 30,0 | 32,0 | 35,0 | 38,0 | 40,0 | 40,0 | | | |
| 5 | 14,0 | 14,0 | 16,0 | 18,0 | 20,0 | 22,0 | 24,0 | 26,0 | 28,0 | 30,0 | 32,0 | 34,0 | 36,0 | 38,0 | 40,0 | | | | |
| 6 | 16,0 | 16,0 | 18,0 | 20,0 | 22,0 | 24,0 | 26,0 | 28,0 | 30,0 | 32,0 | 34,0 | 36,0 | 38,0 | 40,0 | | | | | |
| 7 | 19,0 | 19,0 | 20,0 | 22,0 | 24,0 | 26,0 | 28,0 | 30,0 | 32,0 | 34,0 | 36,0 | 38,0 | 40,0 | | | | | | |
| 8 | 22,0 | 22,0 | 22,0 | 24,0 | 26,0 | 28,0 | 30,0 | 32,0 | 34,0 | 36,0 | 38,0 | 40,0 | | | | | | | |
| 9 | 24,0 | 24,0 | 24,0 | 26,0 | 28,0 | 30,0 | 32,0 | 34,0 | 36,0 | 38,0 | 40,0 | | | | | | | | |
| 10 | 27,0 | 27,0 | 27,0 | 28,0 | 30,0 | 32,0 | 34,0 | 36,0 | 38,0 | 40,0 | | | | | | | | | |
| 11 | 30,0 | 30,0 | 30,0 | 30,0 | 32,0 | 34,0 | 36,0 | 38,0 | 40,0 | | | | | | | | | | |
| 12 | 32,0 | 32,0 | 32,0 | 32,0 | 34,0 | 36,0 | 38,0 | 40,0 | | | | | | | | | | | |
| 13 | 35,0 | 35,0 | 35,0 | 35,0 | 36,0 | 38,0 | 40,0 | | | | | | | | | | | | |
| 14 | 38,0 | 38,0 | 38,0 | 38,0 | 38,0 | 40,0 | | | | | | | | | | | | | |
| 15 | 40,0 | 40,0 | 40,0 | 40,0 | 40,0 | | | | | | | | | | | | | | |
| 16 | 40,0 | 40,0 | 40,0 | 40,0 | | | | | | | | | | | | | | | |
| 17 | 40,0 | 40,0 | 40,0 | | | | | | | | | | | | | | | | |
| 18 | 40,0 | 40,0 | | | | | | | | | | | | | | | | | |
| 19 | 40,0 | | | | | | | | | | | | | | | | | | |

$N_{FC}$ = arrondi.sup ($S_t$ / $S_{FC}$)

FIG.6B

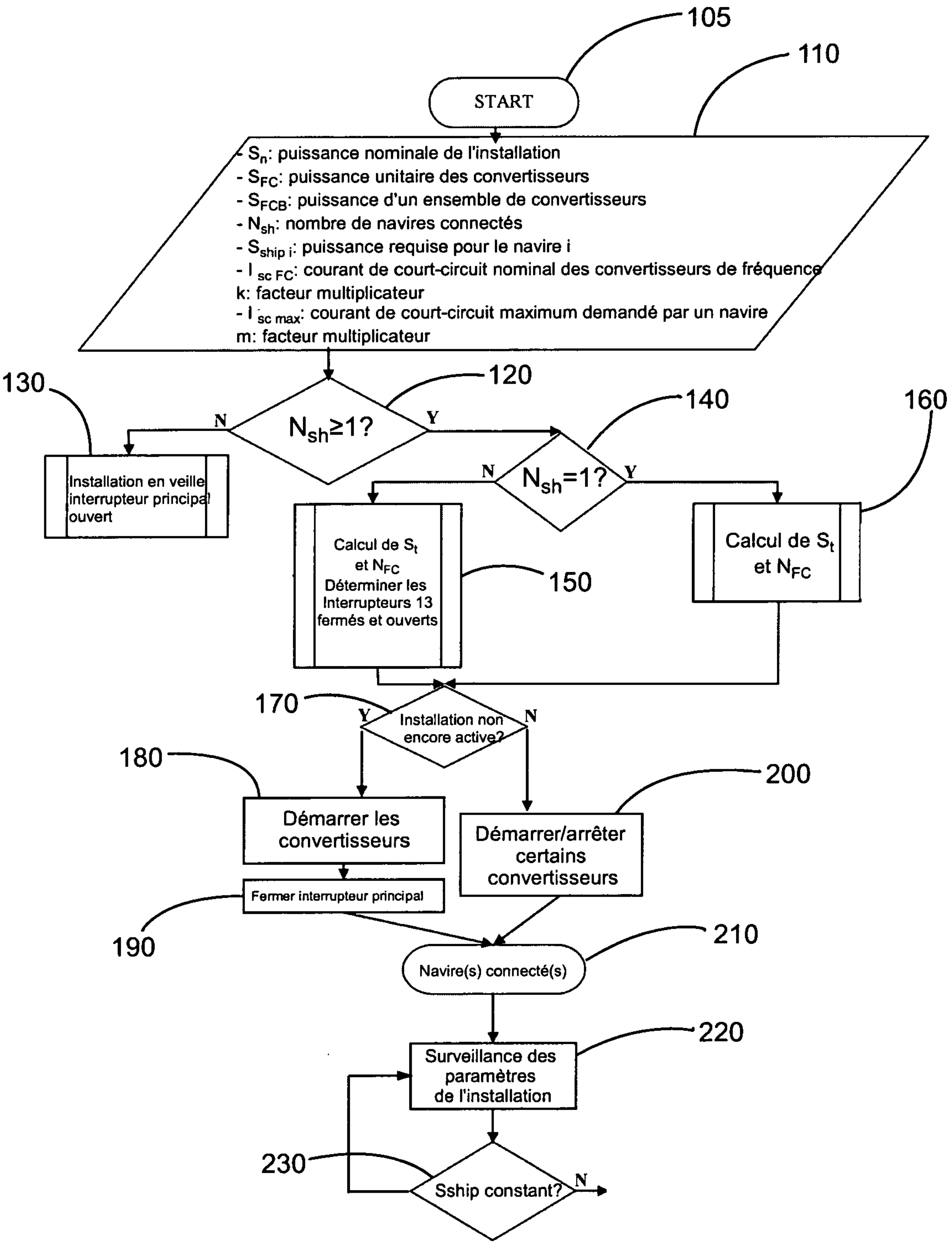
105
110
START
- Sn: puissance nominale de l'installation
- SFC: puissance unitaire des convertisseurs
- SFCB: puissance d'un ensemble de convertisseurs
- Nsh: nombre de navires connectés
- Sship i: puissance requise pour le navire i
- I sc FC: courant de court-circuit nominal des convertisseurs de fréquence
k: facteur multiplicateur
- I sc max: courant de court-circuit maximum demandé par un navire
m: facteur multiplicateur
130
120
140
160
Nsh≥1?
N
Y
Installation en veille interrupteur principal ouvert
Nsh=1?
Calcul de St et NFC Déterminer les Interrupteurs 13 fermés et ouverts
150
Calcul de St et NFC
170
Installation non encore active?
180
200
Démarrer les convertisseurs
Démarrer/arrêter certains convertisseurs
Fermer interrupteur principal
190
210
Navire(s) connecté(s)
220
Surveillance des paramètres de l'installation
230
Sship constant?

FIG.7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- WO 2010066888 A
- US 2005116541 A